# EUROPEAN PATENT APPLICATION

(11) **EP 4 773 501 A1**
(43) Date of publication of application: **08.07.2026**
(21) Application number: 23950717.1
(22) Date of filing: 30.08.2023
(51) Int. Cl.: H02P 27/06

(54) **MOTOR DRIVE DEVICE AND REFRIGERATION CYCLE DEVICE**

(71) Applicant: Carrier Japan Corporation, Tokyo 141-0032 (JP)
(72) Inventor: NISHIO, Motoki, Fuji-shi, Shizuoka 416-8521 (JP); KANAMORI, Masaki, Fuji-shi, Shizuoka 416-8521 (JP)
(74) Representative: Gramm, Lins & Partner Patent- und Rechtsanwälte PartGmbB
(86) International application number: PCT/JP2023/031412
(87) International publication number: WO 2025/046769

(57) **Abstract**

A controller forms, by a first inverter, an interphase conduction path in which one end portions of phase windings of a motor are conductive with each other, forms, by a second inverter, a rectifier circuit for a voltage generated at the other end portions of the phase windings, and executes regenerative-power absorption control which causes regenerative power of the motor to be absorbed by a second capacitor through the rectifier circuit formed.

## Description

### Technical Field

The present invention relates to a motor drive device and a refrigeration cycle device that drive a permanent-magnet synchronous motor having a plurality of phase windings mutually unconnected (a so-called open-winding motor).

### Background Art

Known examples of a drive motor for a compressor used in a refrigeration cycle device such as an air conditioner and a heat source device include a permanent-magnet synchronous motor having a plurality of phase windings connected in a star connection and a permanent-magnet synchronous motor having a plurality of phase windings mutually kept unconnected (in other words, Open-Windings Motors).

A motor drive device for driving the permanent-magnet synchronous motor with the star-connected phase windings comprises a rectifier circuit that rectifies an AC power-supply voltage, a capacitor connected to terminals of the rectifier circuit, and an inverter connected between the capacitor and the respective phase windings, and uses switching of the inverters to drive the motor.

In contrast, a motor drive device for driving the open-winding motor comprises a rectifier circuit that rectifies an AC power-supply voltage, a capacitor connected to terminals of the rectifier circuit, a first inverter connected between the capacitor and one end portions of the respective phase windings, and a second inverter connected between the capacitor and the other end portions of the respective phase windings, and cooperatively switches the first inverter and the second inverter to drive the motor.

### Citation List

### Patent Literatures

Patent Literature 1: JP 4706987 B

### Summary of Invention

### Technical Problem

In the motor drive device described above, regenerative power of the motor may apply to the capacitor through the inverter. This configuration may result in a steep increase in the capacitor voltage and can generate an overvoltage thereof, thereby possibly damaging electrical components such as the capacitor and the rectifier circuit.

Adopting a large-capacitance capacitor enables absorption of the motor regenerative power by the capacitor. However, adopting the large-capacitance capacitor can also cause a large rush current to flow to the capacitor at power-on, and the rush current can possibly damage electrical components such as the rectifier circuit and the inverter.

Embodiments of the present invention aim to provide a motor drive device and a refrigeration cycle device that have improved safety and can prevent overvoltage generation due to motor regenerative power.

### Solution to Problem

According to an embodiment, a motor drive device for a motor having a plurality of phase windings mutually unconnected includes a rectifier circuit which rectifies a voltage of an AC power supply, a first capacitor connected to a terminal of the rectifier circuit, a first inverter including a plurality of first switching elements and first diodes respectively connected in anti-parallel to the first switching elements, the first inverter being connected between the first capacitor and one end portion of each of the phase windings, a second inverter including a plurality of second switching elements and second diodes respectively connected in anti-parallel to the second switching elements, the second inverter being connected to the other end portion of each of the phase windings, a second capacitor connected to the other end portion of each of the phase windings via the second inverter, and a controller. A controller forms, by a first inverter, an interphase conduction path in which one end portions of phase windings are conductive with each other, forms, by a second inverter, a rectifier circuit for a voltage generated at the other end portions of the phase windings, and executes regenerative-power absorption control which causes regenerative power to be absorbed by a second capacitor through the rectifier circuit formed.

### Brief Description of Drawings

FIG. 1 shows configurations of the first to fourth embodiments.
FIG. 2 is a flowchart showing control in the first embodiment.
FIG. 3 shows current paths in regenerative-power absorption control in the first to fourth embodiments.
FIG. 4 shows changes in capacitor voltages before and after execution of the regenerative-power absorption control in the first to fourth embodiments.
FIG. 5 shows a modified example of the current paths of FIG. 3.
FIG. 6 is a flowchart showing control in the second embodiment.
FIG. 7 is a flowchart showing control in the third embodiment.
FIG. 8 is a flowchart showing control in the fourth embodiment.
FIG. 9 shows a configuration of the main part of the fifth embodiment.

### Mode for Carrying Out the Invention

(1) The following describes a motor drive device of the first embodiment.

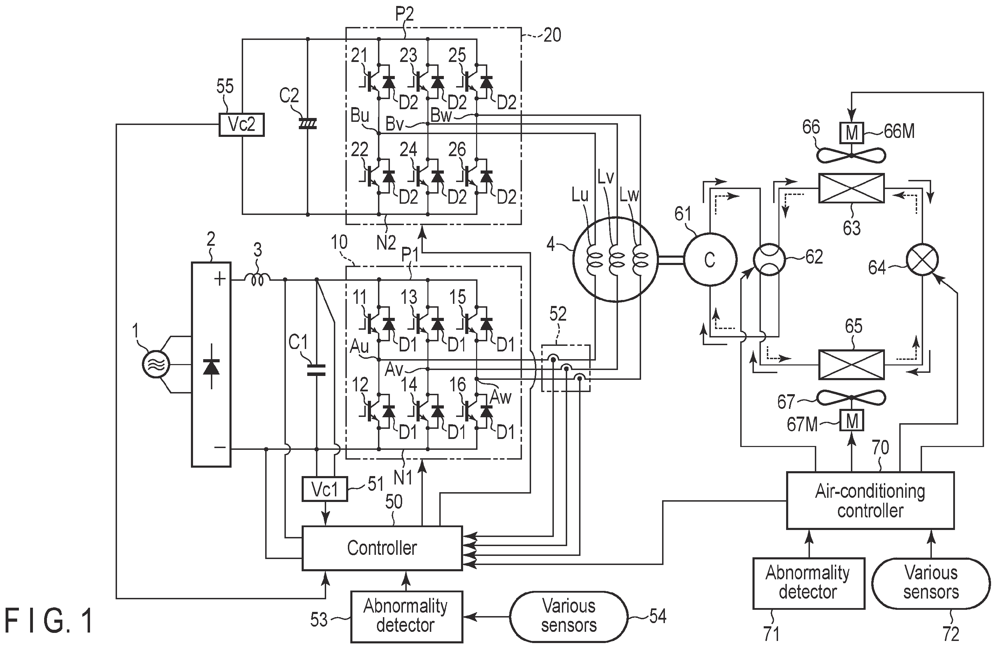

As shown in FIG. 1, a full-wave rectifier circuit 2 (a diode bridge), which full-wave-rectifies an AC voltage Vac of a three-phase AC power supply 1, is connected to the three-phase AC power supply 1. A capacitor (first capacitor) C1 is connected to terminals of the full-wave rectifier circuit 2 via a reactor 3. A positive line P1 and a negative line N1 of an inverter (first inverter) 10 are connected to respective end portions of the capacitor C1. One end portions of respective phase windings Lu, Lv, and Lw of an open-winding motor 4 are connected to respective three-phase terminals Au, Av, and Aw of the inverter 10.

The open-winding motor 4 is a permanent-magnet synchronous motor having the phase windings Lu, Lv, and Lw mutually unconnected. Hereinafter, the open-winding motor 4 is also referred to as a motor 4.

The inverter 10 connects a U-phase series circuit of an upper switch element (first switch element) 11 and a lower switch element (first switch element) 12, a V-phase series circuit of an upper switch element (first switch element) 13 and a lower switch element (first switch element) 14, and a W-phase series circuit of an upper switch element (first switch element) 15 and a lower switch element (first switch element) 16 between the positive line P1 and the negative line N1. The inverter 10 sets an interconnection point between the upper switch element 11 and the lower switch element 12 as a U-phase terminal Au, an interconnection point between the upper switch element 13 and the lower switch element 14 as a V-phase terminal Av, and an interconnection point between the upper switch element 15 and the lower switch element 16 as a W-phase terminal Aw. The inverter 10 converts a DC voltage of the capacitor C1 to a three-phase AC voltage of a predetermined frequency by switching in accordance with a command from a controller 50, and outputs the converted voltage from the U-phase terminal Au, the V-phase terminal Av, and the W-phase terminal Aw as drive power for the motor 4. Reflux diodes (first diodes) D1 for protection of the switch elements 11 to 16 of the inverter 10 are connected in anti-parallel with the respective switch elements 11 to 16.

The inverter 10 turns on the upper switch elements 11, 13, and 15 and turns off the lower switch elements 12, 14, and 16 to form an interphase conduction path in which one end portions of the phase windings Lu, Lv, and Lw are conductive with each other through the upper switch elements 11, 13, and 15 and the reflux diodes D1 of the upper switch elements 11, 13, and 15. Alternatively, the inverter 10 turns off the upper switch elements 11, 13, and 15 and turns on the lower switch elements 12, 14, and 16 to form an interphase conduction path in which one end portions of the phase windings Lu, Lv, and Lw are conductive with each other through the lower switch elements 12, 14, and 16 and the reflux diodes D1 of the lower switch elements 12, 14, and 16.

The other end portions of the respective phase windings Lu, Lv, and Lw of the motor 4 are connected to three-phase terminals Bu, Bv, and Bw of an inverter (second inverter) 20. A capacitor (second capacitor) C2 is connected between a positive line P2 and a negative line N2 of the inverter 20. That is, the second capacitor C2 is connected in parallel with the second inverter 20.

The inverter 20 connects a U-phase series circuit of an upper switch element 21 and a lower switch element 22, a V-phase series circuit of an upper switch element 23 and a lower switch element 24, and a W-phase series circuit of an upper switch element 25 and a lower switch element 26 between the positive line P2 and the negative line N2 and sets the interconnection point between the upper switch element 21 and the lower switch element 22 as a U-phase terminal Bu, the interconnection point between the upper switch element 23 and the lower switch element 24 as a V-phase terminal Bv, and the interconnection point between the upper switch element 25 and the lower switch element 26 as a W-phase terminal Bw. As in the inverter 10, reflux diodes (second diodes) D2 for protection of the switch elements 21 to 26 are connected in anti-parallel with the six switch elements (switch elements 21 to 26) of the inverter 20.

The inverter 20 turns off all of the switch elements 21 to 26 and thereby allows conduction of the reflux diodes D2 of the switch elements 21 to 26( to form a full-wave rectifier circuit for a voltage generated at the other end portions of the phase windings Lu, Lv, and Lw (regenerative power). That is, in some cases, the reflux diodes D2 in the inverter 20 function as regenerative diodes D2. Thus, the reflux diodes D2 are also referred to as regenerative diodes D2 in cases where regenerative-power absorption control described below is executed. The full-wave rectifier circuit formed by the regenerative diodes D2 converts the voltage generated at the other end portions of the phase windings Lu, Lv, and Lw to a DC voltage. The DC voltage applies to the capacitor C2 via the positive line P2 and the negative line N2 of the inverter 20.

The controller 50 is constituted by a microcomputer and peripheral circuits which use a voltage Vc1 of the capacitor C1 as an operating power supply, and operates based on a program stored in an internal memory. The controller 50 may be constituted by a logic circuit. The controller 50 controls on/off states of the switch elements 11 to 16 and 21 to 26 of the inverters 10 and 20, thereby driving the motor 4 at a variable speed. To the controller 50, a voltage detector 51 which detects the voltage Vc1 of the capacitor C1, a voltage detector 55 which detects a voltage Vc2 of the capacitor C2, a current detector 52 which detects a motor current flowing through an energization path between the inverter 10 and the one end portions of the phase windings Lu, Lv, and Lw (also referred to as a load current or a phase-winding current), and an abnormality detector 53 are connected. The abnormality detector 53 detects an abnormality of the motor 4 or the inverters 10 and 20 based on detection results from various sensors 54 that constitute a set of different sensors. Examples of the various sensors include a temperature sensor which detects abnormal overheating of the inverters 10 and 20. The various sensors are not limited to this example and may be a sensor for various abnormality detections.

The controller 50 drives the motor 4 in a so-called open-winding mode by cooperative control of switching of the inverter 10 and switching of the inverter 20 in accordance with the voltage Vc1 across the capacitor C1, the voltage Vc2 across the capacitor C2, the motor current detected by the current detector 52, and a target speed of the motor 4.

When the voltage Vc1 of the capacitor C1 detected by the voltage detector 51 exceeds a predetermined threshold Vcs, the controller 50 determines that regenerative power will be generated in the phase windings Lu, Lv, and Lw of the motor 4 and the regenerative power will apply to the capacitor C1 through the inverter 10. Based on this determination, the controller 50 executes regenerative-power absorption control which causes the regenerative power of the motor 4 to be absorbed by the capacitor C2. More specifically, the controller 50 turns on the upper switch elements 11, 13, and 15 and turns off the lower switch elements 12, 14, and 16 in the inverter 10 (or turns off the upper switch elements 11, 13, and 15 and turns on the lower switch elements 12, 14, and 16) to form an interphase conduction path in which one end portions of the phase windings Lu, Lv, and Lw are conductive with each other through the upper switch elements 11, 13, and 15 and the reflux diodes D1 of the upper switch elements 11, 13, and 15. Further, the controller 50 turns off all of the switch elements 21 to 26 in the inverter 20 and achieves conduction of the reflux diodes D2 of the switch elements 21 to 26 resulting from the turning off, thereby forming the full-wave rectifier circuit for the voltage generated at the other end portions of the phase windings Lu, Lv, and Lw and causing the regenerative power of the motor 4 to be absorbed by the capacitor C2 through the full-wave rectifier circuit.

Executing the regenerative-power absorption control avoids application of the regenerative power of the motor 4 to the capacitor C1 through the inverter 10. Accordingly, the capacitor C1 only needs to have a capacitance sufficient to remove high-frequency components included in the voltage Vc1 at the capacitor C1 generated by switching of the inverters 10 and 20, and the capacitance may be about tens of µF. This configuration allows omission of a rush-current prevention circuit for the capacitor C1 and contributes to size reduction and simplification of the circuit while maintaining safety. The capacitor C1 may employ a film capacitor with a small size and a small capacitance rather than an electrolytic capacitor. In contrast, the capacitor C2, which absorbs regenerative power, has a capacitance larger than that of the capacitor C1. For example, the capacitor C2 is an electrolytic capacitor having the capacitance of about several hundreds of µF.

The full-wave rectifier circuit 2, the reactor 3, the capacitor C1, the inverters 10 and 20, the capacitor C2, the controller 50, the voltage detector 51, the current detectors 52 and 55, the abnormality detector 53, and the various sensors 54 constitute a motor drive device which drives the motor 4.

The motor 4 is, for example, a drive motor for a compressor 61 in a refrigeration cycle device. A shaft of a compression mechanism (not shown) of the compressor 61 and a rotation shaft of the motor 4 are connected directly, i.e., integrally formed. Rotation of the rotation shaft of the motor 4 actuates the compression mechanism of the compressor 61 to compress refrigerant. One end portion of an outdoor heat exchanger 63 is connected to the compressor 61 via a pipe through a four-way valve 62. One end portion of an indoor heat exchanger 65 is connected to the other end of the outdoor heat exchanger 63 via a pipe through an electric expansion valve 64 serving as a pressure reducer. Further, the suction port of the compressor 61 is connected to the other end of the indoor heat exchanger 65 via a pipe through the four-way valve 62. These piping connections constitute a heat-pump refrigeration cycle. An outdoor fan 66 is provided in the vicinity of the outdoor heat exchanger 63. An indoor fan 67 is provided in the vicinity of the indoor heat exchanger 65.

As indicated by solid arrows in FIG. 1, gas refrigerant discharged from the compressor 61 flows to the outdoor heat exchanger 63 via the four-way valve 62 during cooling operation. The gas refrigerant having flowed to the outdoor heat exchanger 63 releases heat to outside air and condenses. Liquid refrigerant flowing out of the outdoor heat exchanger (condenser) 63 undergoes pressure reduction in the electric expansion valve 64 and flows to the indoor heat exchanger 65. The liquid refrigerant having flowed to the indoor heat exchanger 65 absorbs heat from indoor air and evaporates. Gas refrigerant flowing out of the indoor heat exchanger (evaporator) 65 is drawn to the compressor 61 via the four-way valve 62. As indicated by dashed arrows in FIG. 1, switching of a flow path of the four-way valve 62 causes gas refrigerant discharged from the compressor 61 to flow to the indoor heat exchanger 65 via the four-way valve 62 during heating operation. The gas refrigerant having flowed to the indoor heat exchanger 65 releases heat to indoor air and condenses. Liquid refrigerant flowing out of the indoor heat exchanger (condenser) 65 undergoes pressure reduction in the electric expansion valve 64 and flows to the outdoor heat exchanger 63. The liquid refrigerant having flowed to the outdoor heat exchanger 63 absorbs heat from outdoor air and evaporates. Gas refrigerant flowing out of the outdoor heat exchanger (evaporator) 63 is drawn to the compressor 61 via the four-way valve 62.

The four-way valve 62, the electric expansion valve 64, a fan motor 66M of the outdoor fan 66, and a fan motor 67M of the indoor fan 67 are connected to an air-conditioning controller 70. An abnormality detector 71 and various sensors 72 are connected to the air-conditioning controller 70. The abnormality detector 71 detects an abnormality of the heat-pump refrigeration cycle and abnormalities of the fan motors 66M and 67M. The various sensors 72 constitute a set of various sensors that detect an indoor-air temperature, an outside-air temperature, a heat-exchanger temperature, a refrigerant temperature, a high-side pressure of the refrigeration cycle, and other parameters.

The air-conditioning controller 70 controls the four-way valve 62, the electric expansion valve 64, and the fan motors 66M and 67M in accordance with detection results of the abnormality detector 71 and detection results of the various sensors 72, and instructs the controller 50 about a target speed of the motor 4.

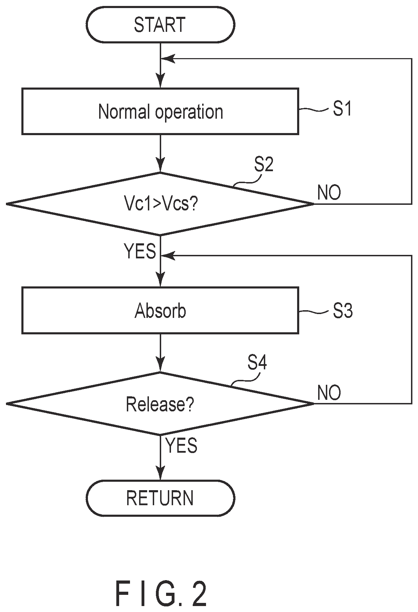

The following describes control executed by the controller 50 with reference to the flowchart of FIG. 2.

The controller 50 executes cooperative control of switching of the inverter 10 and switching of the inverter 20, thereby driving the motor 4 in an open-winding state (open-winding mode). The controller 50 also executes normal operation which controls ON-duty and OFF-duty of switching of the inverters 10 and 20 such that the motor 4 reaches the target speed instructed from the air-conditioning controller 70 (S1).

In addition to this normal operation, the controller 50 compares the voltage Vc1 of the capacitor C1 detected by the voltage detector 51 with a predetermined threshold Vcs (S2). The threshold Vcs serves as a reference for determining whether regenerative power of the motor 4 (regenerative power arising from inertial energy of the motor 4, magnetic energy stored in the phase windings Lu, Lv, and Lw, a voltage induced in the phase windings Lu, Lv, and Lw due to rotation of magnets of a rotor of the motor 4, and other factors) will apply to the capacitor C1 through the inverter 10.

For example, when the abnormality detector 53 detects an abnormality and the controller 50 stops switching of the inverters 10 and 20 to stop driving of the motor 4 (protective stop), in other words, when all of the switching elements of the inverters 10 and 20 are turned off, the rotor of the motor 4 continues rotating by inertia. In that case, inertial energy expressed by "(1/2)·J·ω^2" occurs in accordance with an inertia J and a rotation speed ω of the motor 4. This inertial energy tends to apply to the capacitor C1 through the inverter 10 as regenerative power.

A capacitor absorbable energy takes a value expressed by "(1/2)·C·(V2^2-V1^2)" when V1 denotes a steady-state voltage across the capacitor, V2 denotes a voltage across the capacitor after overvoltage generation, and C denotes a capacitance of the capacitor. The voltage V2 across a capacitor depends on a rated voltage of a full-wave rectifier circuit connected to this capacitor. In contrast, the amount of regenerative power absorbable by a capacitor depends on the capacitance C of this capacitor. Increasing the capacitance C increases the absorbable amount of regenerative power. In contrast, decreasing the capacitance C decreases the absorbable amount of regenerative power. A capacitor having a small capacitance C may fail to absorb large regenerative power and cause a capacitor failure.

As described above, the capacitor C1 has a capacitance limited to a size sufficient to remove high-frequency components generated by switching of the inverters 10 and 20. Accordingly, large regenerative power of the motor 4 needs to be absorbed by the capacitor C2 having a capacitance larger than that of the capacitor C1, without applying the large regenerative power to the capacitor C1.

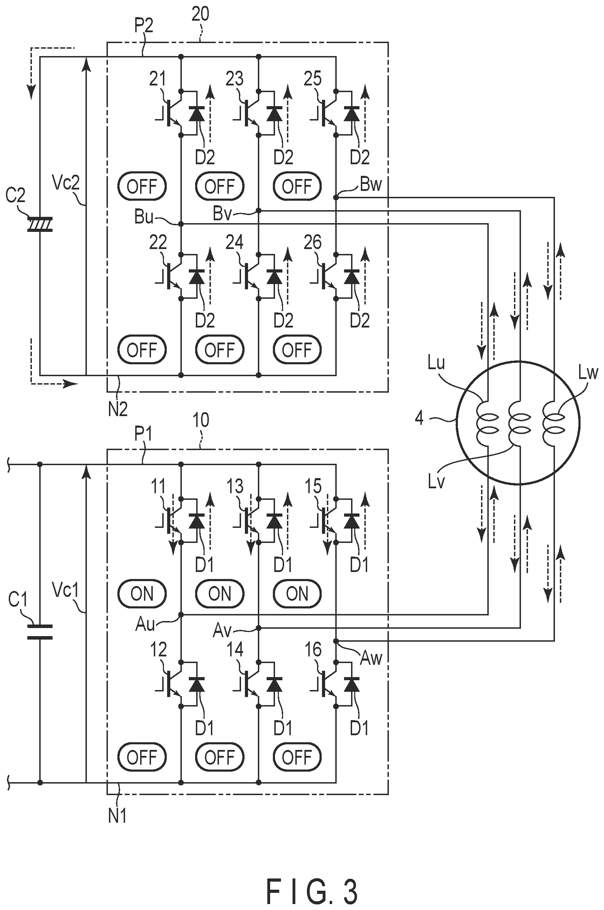

When the voltage Vc1 of the capacitor C1 exceeds the threshold Vcs set slightly below an allowable range under a rating of the capacitor C1 (YES in S2), the controller 50 determines that regenerative power of the motor 4 will be generated and applied to the capacitor C1 through the inverter 10, and then the controller 50 executes regenerative-power absorption control which causes the regenerative power of the motor 4 to be absorbed by the capacitor C2 (S3). In the regenerative-power absorption control, as shown in FIG. 3, the controller 50 turns on the upper switching elements 11, 13, and 15 and turns off the lower switching elements 12, 14, and 16 of the inverter 10, thereby forming an interphase conduction path in which one end portions of the phase windings Lu, Lv, and Lw are conductive with each other through the upper switching elements 11, 13, and 15 and the reflux diodes D1 of the upper switching elements 11, 13, and 15. Further, the controller 50 turns off all of the switch elements 21 to 26 of the inverter 20. Turning off all of the switching elements 21 to 26 of the inverter 20 causes the respective regenerative diodes D2 of the inverter 20 to form a full-wave rectifier circuit for a voltage generated at the other end portions of the phase windings Lu, Lv, and Lw of the motor 4.

The formation of the interphase conduction path in which one end portions of the phase windings Lu, Lv, and Lw are conductive with each other via the upper switching elements 11, 13, and 15 and the reflux diodes D1 of the upper switching elements 11, 13, and 15 blocks the regenerative power of the motor 4 at the inverter 10 and prevents regenerative current from flowing to the capacitor C1. Further, the formation of the full-wave rectifier circuit for the voltage generated at the other end portions of the phase windings Lu, Lv, and Lw with the regenerative diodes D2 by the reflux diodes D2 causes the regenerative power of the motor 4 to be converted to a DC voltage at the inverter 20 and applied to the capacitor C2.

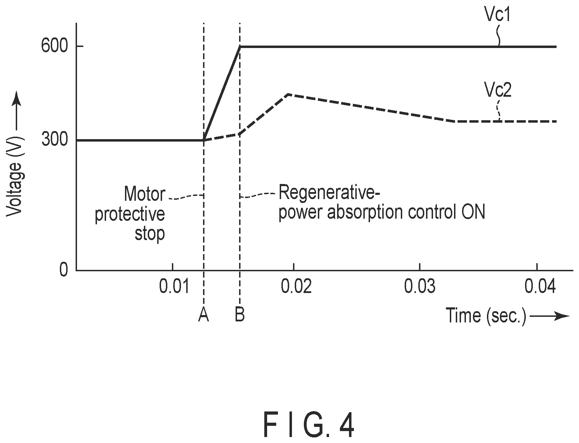

FIG. 4 shows an example of changes in the voltage Vc1 of the capacitor C1 and changes in the voltage Vc2 of the capacitor C2 during execution of the regenerative-power absorption control. This example uses an AC voltage Vc of the three-phase AC power supply 1 of 200 V and uses the threshold Vcs set to about 600 V. In FIG. 4, normal motor driving in the open-winding mode continues up to the time point A, and the voltage Vc of the capacitor C1 remains at about 300 V corresponding to a full-wave-rectified value of the AC voltage Vc of the three-phase AC power supply 1.

FIG. 4 also shows the example in which control of the inverters 10 and 20 keeps the voltage Vc2 of the capacitor C2 substantially equal to the voltage Vc1 of the capacitor C1 at 300 V. The voltage values are not limited to this example. Control of the inverters 10 and 20 allows adjustment of the voltage Vc2 of the capacitor C2 to an arbitrary value. For example, Japanese Patent No. 6755845 of the applicant of the present application describes a method for generating the voltage Vc2 of the capacitor C2.

When operation of the inverters 10 and 20 stops for some reason at the time point A, or when a rapid deceleration of the motor speed occurs, regenerative power occurs in the motor 4. Application of this regenerative power to the capacitors C1 and C2 increases the voltages Vc1 and Vc2 of the capacitors C1 and C2. The voltage Vc1 of the capacitor C1 then exceeds the threshold Vcs of about 600 V at the time point B.

When the voltage Vc1 of the capacitor C1 exceeds the threshold Vcs (YES in S2), the controller 50 executes the regenerative-power absorption control described above. Execution of the regenerative-power absorption control causes current due to regenerative power to flow to the capacitor C2 having a large capacitance rather than to the capacitor C1. Accordingly, after the time point B, the voltage Vc1 of the capacitor C1 remains at about 600 V of the threshold Vcs without further increasing.

In contrast, the voltage Vc2 of the capacitor C2 increases due to the regenerative current. The capacitor C2 has a sufficient capacitance, thereby keeping the voltage Vc2 below 500 V even at a peak. Around time 0.02 seconds in FIG. 4, the regenerative-power generation ends and the regenerative current stops flowing to the capacitor C2. After that point, natural electric discharge of the capacitor C2 causes the voltage Vc2 of the capacitor C2 to gradually decrease. After elapse beyond the time shown in FIG. 4, the voltage Vc1 of the capacitor C1 also gradually decreases to about 300 V corresponding to a normal-operation level.

Absorbing the regenerative power of the motor 4 to the capacitor C2 without applying the regenerative power of the motor 4 to the capacitor C1 eliminates a failure that the voltage Vc1 of the capacitor C1 sharply increases to an overvoltage. Avoiding overvoltage generation contributes to preventing damage to electrical components such as the capacitor C1 and the full-wave rectifier circuit 2.

Increasing the capacitance of the capacitor C1 as a countermeasure against overvoltage would require adoption of a rush-current prevention circuit to address a failure that a large rush current flows to the capacitor C1 upon application of the three-phase AC power supply 1. In contrast, the above-described example absorbs the regenerative power of the motor 4 to the capacitor C2 without applying the regenerative power to the capacitor C1, thereby avoiding a need for increasing the capacitance of the capacitor C1. The above-described example therefore avoids the failure that rush current flows to the capacitor C1. Further, the above-described example keeps all of the switching elements 11 to 16 of the inverter 10 turned off when the three-phase AC power supply 1 is applied and thus prevents the failure that rush current flows to the capacitor C2 as well.

Eliminating the flow of rush current removes the need for adopting a rush-current prevention circuit. This configuration can reduce the capacity of the reactor 3 and minimize the circuit scale of the motor drive device.

Controlling input power supplied from the motor 4 to the inverter 20 can adjust the voltage Vc2 of the capacitor C2 to an arbitrary value. This adjustment enables instantaneous output of active power from the capacitor C2 and the inverter 20 to suppress pulsation of the motor 4. Further, the instantaneous output of reactive power from the capacitor C2 and the inverter 20 also enables expansion of an operating speed range of the motor 4.

After the execution of the regenerative-power absorption control, the controller 50 determines whether release conditions for releasing the regenerative-power absorption control is satisfied (S4). Examples of the release condition include elapse of a predetermined time, release of abnormality detection (release of protective stop) by the abnormality detector 53, and change of the target speed instructed from the air-conditioning controller 70. The compressor 61 requires a high torque to compress refrigerant to a high pressure. That is, the compressor 61 operates under high load. When current application to the motor 4 driving the compressor 61 stops, inertial rotation continues only for a very short time. Thus, using time as a criterion for releasing the regenerative-power absorption control allows a duration of 0.1 seconds from start of the regenerative-power absorption control to suffice.

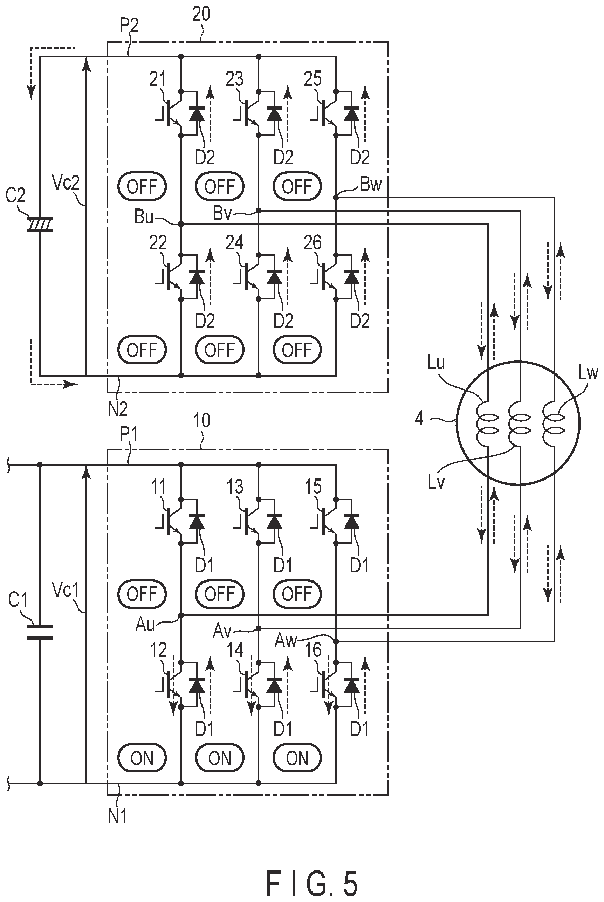

When the voltage Vc1 remains at or below the threshold Vcs in the step S2 (NO in S2), the controller 50 determines that regenerative power of the motor 4 will not be generated, and then the controller 50 continues the normal operation (S1). In the embodiment described above, the regenerative-power absorption control forms the interphase conduction path in which one end portions of the phase windings Lu, Lv, and Lw are conductive with each other through the upper switch elements 11, 13, and 15 and the reflux diodes D1 of the upper switch elements 11, 13, and 15 by turning on the upper switch elements 11, 13, and 15 and turning off the lower switch elements 12, 14, and 16 of the inverter 10. Alternatively, as shown in FIG. 5, the regenerative-power absorption control may form the interphase conduction path in which one end portions of the phase windings Lu, Lv, and Lw are conductive with each other through the lower switch elements 12, 14, and 16 and the reflux diodes D1 of the lower switch elements 12, 14, and 16 by turning off the upper switches 11, 13, and 15 and turning on the lower switch elements 12, 14, and 16 of the inverter 10. This switching pattern also enables absorption of the regenerative power to the capacitor C2.

(2) The following will describe the second embodiment.

The first embodiment determines starting of the regenerative-power absorption control based on an increase in the voltage Vc1 of the capacitor C1. In contrast, in the second embodiment, the controller 50 executes the regenerative-power absorption control when a decrease amount "-ΔH" of a speed H of the motor 4 exceeds a predetermined threshold "-ΔHs". The other configurations of the second embodiment are the same as those of the first embodiment.

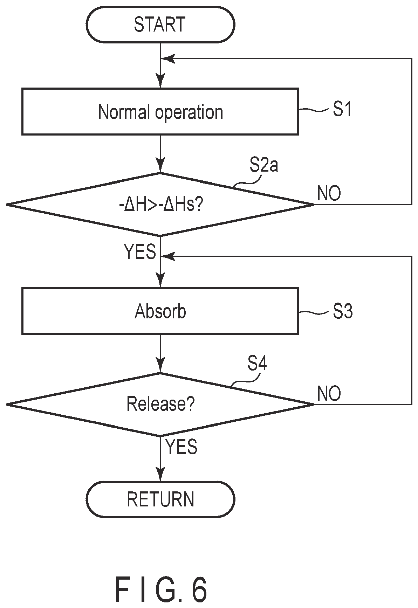

As shown in the flowchart of FIG. 6, in addition to the normal operation executing switch control of the inverter 10 such that the speed of the motor 4 reaches a target speed instructed from the air-conditioning controller 70 (S1), the controller 50 compares the decrease amount "-ΔH" of the speed H of the motor 4 with the predetermined threshold "-ΔHs" (S2a). The decrease amount "-ΔH" of the speed H of the motor 4 corresponds to a decrease amount of the target speed instructed from the air-conditioning controller 70. The threshold "-ΔHs" serves as a reference for determining whether a rapid decrease of the target speed (a rapid decrease of an output frequency of the inverter 10) will generate an induced voltage (regenerative power) in the phase windings Lu, Lv, and Lw of the motor 4.

For example, even when the target speed rapidly decreases, inertial rotation of a rotor continues in accordance with the target speed up to that point, the regenerative energy of the motor 4 is generated. This regenerative energy tends to apply, as the regenerative power of the motor 4, to the inverter 10 and the capacitor C1.

When the decrease amount "-ΔH" of the speed H remains at or below the threshold "-ΔHs" (NO in S2a), the controller 50 determines that the regenerative power of the motor 4 will not be generated, and then the controller 50 continues the normal operation (S1).

When the decrease amount "-ΔH" of the speed H exceeds the threshold "-ΔHs" (YES in S2a), the controller 50 determines that the regenerative power of the motor 4 will be generated, and then the controller 50 executes the regenerative-power absorption control (S3). This regenerative-power absorption control is the same as that in the first embodiment. Further, the effects achieved by executing this regenerative-power absorption control are the same as those in the first embodiment. The above example assumes that the decrease amount of the speed H of the motor 4 corresponds to a decrease amount of the target speed instructed from the air-conditioning controller 70. Alternatively, an actual motor speed may be detected or estimated and the speed H may be replaced with a decrease amount of the actual motor speed of the motor 4.

In addition to the execution of the regenerative-power absorption control, the controller 50 determines whether release conditions for releasing the regenerative-power absorption control are satisfied (S4). Examples of the release condition include elapse of a predetermined time and a change of the target speed instructed from the air-conditioning controller 70.

This method achieves detection or prediction of the generation of regenerative-energy generation before the voltage Vc1 of the capacitor C1 in the first embodiment exceeds the threshold Vcs. However, this method responds only to a rapid decrease in a rotational speed of the motor 4. Combining this method with the first embodiment is therefore preferable.

(3) The following will describe the third embodiment.

In the third embodiment, the controller 50 executes the regenerative-power absorption control when a supply power P from the inverter 10 to the phase windings Lu, Lv, and Lw of the motor 4 becomes a negative value or when a decrease amount "-ΔP" of the supply power P from the inverter 10 to the phase windings Lu, Lv, and Lw exceeds a predetermined threshold "-ΔPs". The other configurations of the third embodiment are the same as those of the first embodiment.

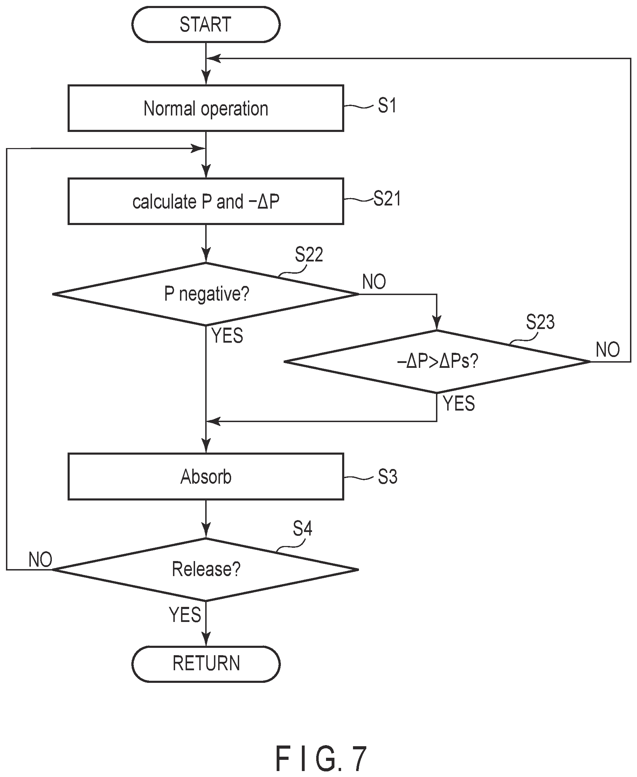

As shown in the flowchart of FIG. 7, in addition to the normal operation executing switch control of the inverter 10 such that the speed of the motor 4 reaches a target speed instructed from the air-conditioning controller 70 (S1), the controller 50 calculates the supply power P supplied from the inverter 10 to the phase windings Lu, Lv, and Lw based on an output voltage of the inverter 10 corresponding to an output frequency of the inverter 10 and a motor current detected by the current detector 52 (load current), and when the calculated supply power P exhibits a decreasing tendency, calculates a decrease amount "-ΔP" (S21).

The controller 50 then determines whether the calculated supply power P has a negative value (S22). The supply power P has a positive value when the regenerative power of the motor 4 is not generated. Even when the regenerative power of the motor 4 is generated, the supply power P remains positive as long as the supply power P exceeds the regenerative power. When the supply power P is smaller than the regenerative power of the motor 4, the supply power P is negative.

When the supply power P does not have a negative value (YES in S1), the controller 50 compares the calculated decrease amount "-ΔP" with the predetermined threshold "-ΔPs" (S23). The threshold "-ΔPs" serves as a reference for determining whether a rapid decrease of the target speed (a rapid decrease of an output frequency of the inverter 10) will generate the regenerative power of the motor 4.

For example, even when the target speed rapidly decreases, inertial rotation of a rotor continues in accordance with the target speed up to that point, the regenerative energy of the motor 4 is generated. This regenerative energy tends to apply, as the regenerative power of the motor 4, to the inverter 10 and the capacitor C1.

When the decrease amount "-PH" of the supply power P remains at or below the threshold "-ΔPs" (NO in S23), the controller 50 determines that regenerative power of the motor 4 will not be generated, and then the controller 50 continues the normal operation (S1).

When the decrease amount "-P" of the supply power P exceeds the threshold "-ΔPs" (YES in S23), the controller 50 determines that the regenerative power of the motor 4 will be generated, and then the controller 50 executes the regenerative-power absorption control (S3). This regenerative-power absorption control is the same as that in the first embodiment. Further, the effects achieved by executing this regenerative-power absorption control are the same as those in the first embodiment.

In addition to the execution of the regenerative-power absorption control, the controller 50 determines whether release conditions for releasing the regenerative-power absorption control are satisfied (S4). Examples of the release condition include elapse of a predetermined time and a change of the target speed instructed from the air-conditioning controller 70.

(4) The following will describe the fourth embodiment.

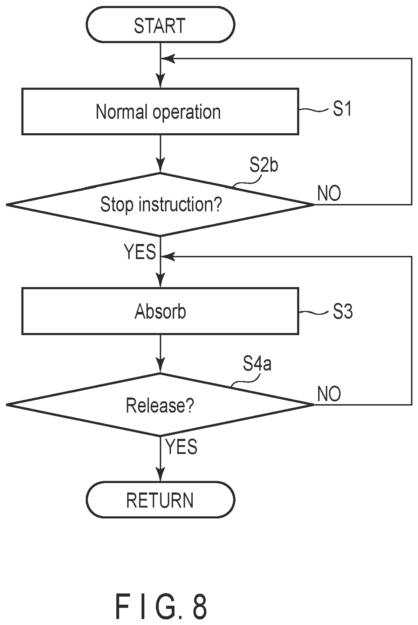

In the fourth embodiment, the controller 50 executes the regenerative-power absorption control when the controller 50 receives a stop instruction for the motor 4 from the air-conditioning controller 70. The other configurations of the fourth embodiment are the same as those of the first embodiment. As shown in the flowchart of FIG. 8, in addition to the normal operation executing switch control of the inverter 10 such that the speed of the motor 4 reaches a target speed instructed from the air-conditioning controller 70 (S1), the controller 50 monitors issuance of a stop instruction for the motor 4 (S2b). Examples of the stop instruction for the motor 4 include a stop instruction from the air-conditioning controller 70, a stop instruction (protective stop) issued when the abnormality detector 53 detects an abnormality, and a stop instruction issued by the controller 50 itself when the motor current detected by the current detector 52 abnormally increases (overcurrent stop). Examples of abnormalities detected by the abnormality detector 53 include abnormal increase or abnormal decrease in an AC voltage of the three-phase AC power supply 1, abnormal AC current of the three-phase AC power supply 1, and loss of synchronism of the motor 4.

When the controller 50 does not receive the stop instruction for the motor 4 (NO in S2b), the controller 50 determines that the regenerative power of the motor 4 will not be generated, and then the controller 50 continues the normal operation (S1).

When the controller 50 receives a stop instruction for the motor 4, the controller 50 immediately stops switching of the inverter 10. However, inertial rotation of the rotor of the motor 4 can continue and can generate regenerative energy. This regenerative energy tends to apply, as regenerative power, from the phase windings Lu, Lv, and Lw to the inverter 10 and the capacitor C1.

Accordingly, upon receiving the stop instruction for the motor 4 (YES in S2b), the controller 50 determines that the regenerative power of the motor 4 will likely be generated, and then the controller 50 executes the regenerative-power absorption control (S3). This regenerative-power absorption control is the same as that in the first embodiment. Further, the effects achieved by executing this regenerative-power absorption control are the same as those in the first embodiment.

In addition to the execution of the regenerative-power absorption control, the controller 50 determines whether release conditions for releasing the regenerative-power absorption control are satisfied (S4). Examples of the release condition include release of the stop instruction for the motor 4, elapse of a predetermined time, and a change of the target speed instructed from the air-conditioning controller 70.

(5) The following will describe the fifth embodiment.

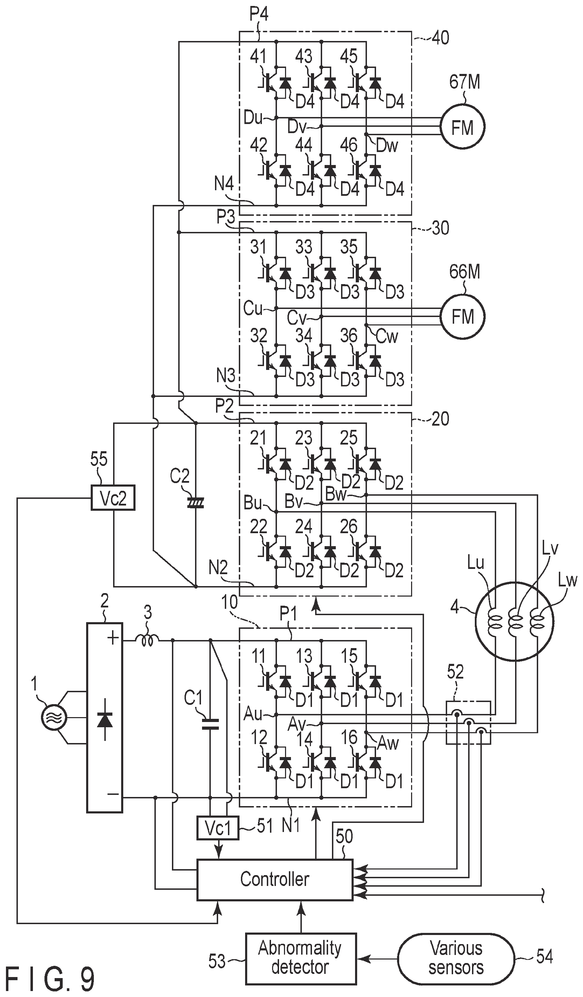

As shown in FIG. 9, a positive line P3 and a negative line N3 of an inverter (third inverter) 30 are connected to respective end portions of the capacitor C2. Three-phase terminals Cu, Cv, and Cw of the inverter 30 are connected to a fan motor (a three-phase permanent-magnet synchronous motor) 67M of the indoor fan 67 shown in FIG. 1. Further, a positive line P4 and a negative line N4 of an inverter (fourth inverter) 40 are connected to respective end portions of the capacitor C2. Three-phase terminals Du, Dv, and Dw of the inverter 40 are connected to a fan motor (a three-phase permanent-magnet synchronous motor) 68M of the outdoor fan 68 shown in FIG. 1.

This configuration enables effective utilization of regenerative power absorbed by the capacitor C2 as drive power for the fan motors 66M and 68M. The other configurations and the effects of the fifth embodiment are the same as those of the first embodiment.

The first to fifth embodiments described above employ different determination criteria for detecting or predicting generation of regenerative power. These determination criteria in the respective embodiments may be selectively combined as appropriate.

While certain embodiments and modification examples have been described, they have been presented by way of example only, and are not intended to limit the scope of the inventions. Indeed, the novel embodiments described herein may be embodied in a variety of other forms; furthermore, various omissions, substitutions and changes in the form of the embodiment described herein may be made without departing from the spirit of the invention. The accompanying claims and their equivalents are intended to cover such forms or modifications as would fall within the scope and spirit of the inventions.

### Reference Signs List

1 ... Three-phase AC power supply, 2 ... Full-wave rectifier circuit, 3 ... Reactor, 4 ... Open-winding motor, Lu,Lv,Lw ... Phase windings, C1 ... Capacitor (first capacitor), 10 ... Inverter (first inverter), 20 ... Inverter (second inverter), C2 ... Capacitor (second capacitor), 50 ... Controller, 61 ... Compressor, 62 ... Four-way valve, 63 ... Outdoor heat exchanger, 65 ... Indoor heat exchanger, 66 ... Outdoor fan, 67 ... Indoor fan, 70 ... Air-conditioning controller

## Claims

1. A motor drive device for a motor having a plurality of phase windings mutually unconnected, the motor drive device comprising:
a rectifier circuit which rectifies a voltage of an AC power supply;
a first capacitor connected to a terminal of the rectifier circuit;
a first inverter including a plurality of first switching elements and first diodes respectively connected in anti-parallel to the first switching elements, the first inverter being connected between the first capacitor and one end portion of each of the phase windings;
a second inverter including a plurality of second switching elements and second diodes respectively connected in anti-parallel to the second switching elements, the second inverter being connected to the other end portion of each of the phase windings;
a second capacitor connected to the other end portion of each of the phase windings via the second inverter; and
a controller which forms, by the first inverter, an interphase conduction path in which the one end portions of the phase windings are conductive with each other, forms, by the second inverter, a rectifier circuit for a voltage generated at the other end portions of the phase windings, and executes regenerative-power absorption control which causes regenerative power of the motor to be absorbed by the second capacitor through the rectifier circuit formed.

2. The motor drive device of claim 1, wherein
the first capacitor has a capacitance of a size sufficient to remove a high-frequency component, included in a voltage generated across the first capacitor, which arises from switching of the first inverter and the second inverter, and
the second capacitor has a capacitance larger than that of the first capacitor.

3. The motor drive device of claim 1, wherein
when a voltage of the first capacitor exceeds a threshold, the controller executes the regenerative-power absorption control.

4. The motor drive device of any one of claim 1 or claim 3, wherein
when a decrease amount of a speed of the motor exceeds a threshold, the controller executes the regenerative-power absorption control.

5. The motor drive device of any one of claim 1 or claim 3, wherein
when supply power from the first inverter to each of the phase windings is a negative value, the controller executes the regenerative-power absorption control, and
when a decrease amount of the supply power from the first inverter to each of the phase windings exceeds a threshold, the controller executes the regenerative-power absorption control.

6. The motor drive device of any one of claim 1 or claim 3, wherein
the controller executes the regenerative-power absorption control upon receiving a stop instruction for the motor.

7. The motor drive device of claim 1, further comprising:
a third inverter configured to convert a voltage of the second capacitor to drive power for another motor.

8. A refrigeration cycle device comprising the motor drive device of claim 1, the refrigeration cycle device comprising:
a compressor driven by the motor to suction, compress, and discharge refrigerant; and
a heat-pump refrigeration cycle which returns the refrigerant discharged from the compressor to a suction side of the compressor via a four-way valve, a condenser, a pressure reducer, and an evaporator.
